# EUROPEAN PATENT APPLICATION

(11) **EP 3 531 548 A1**
(43) Date of publication of application: **28.08.2019**
(21) Application number: 18794980.5
(22) Date of filing: 13.04.2018
(51) Int. Cl.: H02M 7/06, H02M 3/155, H02M 7/48

(54) **CONVERTER CONTROL DEVICE, CONVERTER PROVIDED WITH SAME, AIR CONDITIONER, AND CONVERTER CONTROL METHOD AND CONVERTER CONTROL PROGRAM**

(30) Priority: 02.05.2017 JP 2017091855
(71) Applicant: Mitsubishi Heavy Industries Thermal Systems, Ltd., Tokyo 108-8215 (JP)
(72) Inventor: SATO, Takeshi, Tokyo 108-8215 (JP); SUMITO, Kiyotaka, Tokyo 108-8215 (JP); WATANABE, Takamasa, Tokyo 108-8215 (JP); TAKADA, Junichi, Tokyo 108-8215 (JP); SHIMIZU, Kenji, Tokyo 108-8215 (JP)
(74) Representative: Henkel, Breuer & Partner
(86) International application number: PCT/JP2018/015596
(87) International publication number: WO 2018/203469

(57) **Abstract**

Provided is a converter device that is inexpensive and that reduces noise occurring from an inductive element while using a carrier frequency in an audible range. A converter control device (15) for a converter is provided with: a reference waveform generation unit (30) that generates a reference waveform of a predetermined carrier frequency in an audible range; a first waveform generation unit (31) that generates a first waveform changing, in a predetermined frequency range, the shape of the reference waveform generated by the reference waveform generation unit (30); a voltage command generation unit (32) that generates a voltage command; a switching signal generation unit (34) that compares the first waveform with the voltage command and outputs a switching signal Sg for determining an on/off duty ratio of a switching element; and a drive unit (35) that turns on and off the switching element on the basis of the switching signal Sg.

## Description

### Technical Field

The present invention relates to a converter control device, a converter provided with the same, an air conditioner, and a converter control method and a converter control program.

### Background Art

In a converter device, it is known that a lower limit value is used as a carrier frequency instead of an upper limit value in an upper-lower limit range in which a switching frequency satisfying a harmonic regulation value is set to the lower limit value, and a switching frequency satisfying a noise regulation value is set to the upper limit value, during a normal load (refer to the following PTL 1). However, in a case where the converter device is subjected to switching at the carrier frequency, a reactor vibrates at the carrier frequency. As a result, generally, a baffle plate attached with the reactor is caused to vibrate, and thus sounds are generated at the carrier frequency and frequencies of n times thereof. The frequencies are in the audible range, and thus cause unpleasant sounds such as a carrier sound and n-time sounds.

In order to reduce such unpleasant sounds, PTL 2 proposes a technique for reducing vibration of a reactor which is transmitted to a baffle plate by using a vibration proof nut for a converter device provided in an air conditioner.

### Citation List

### Patent Literature

[PTL 1] Japanese Unexamined Patent Application Publication No. 2014-150622
[PTL 2] Japanese Unexamined Patent Application Publication No. 2002-267210

### Summary of Invention

### Technical Problem

However, in the method disclosed in PTL 2, a vibration proof nut is required to be highly accurately processed. The vibration proof nut becomes expensive, cost is increased, and thus there is a problem in which a converter device is not simple.

In order to avoid sounds caused by reactor vibration and generated sounds similar thereto, a carrier sound may be set in a range other than the audible range (for example, 20 kHz or higher). However, in a case where such setting is performed, a converter device becomes expensive and complex.

The present invention has been made in light of the circumstances, and an object thereof is to provide a converter control device which is made cheap by reducing noise generated from an inductive element while using a carrier frequency in the audible range, a converter provided with the converter control device, an air conditioner, a converter control method, and a converter control program.

### Solution to Problem

The present invention employs the following means in order to solve the problem.

According to an aspect of the present disclosure, there is provided a converter control device of a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control device including reference waveform generation means for generating a reference waveform having a predetermined carrier frequency in an audible range; first waveform generation means for generating a first waveform by changing a shape of the reference waveform generated by the reference waveform generation means in a predetermined frequency range; voltage command generation means for generating a voltage command; switching signal generation means for comparing the first waveform with the voltage command, so as to output a switching signal for determining a duty ratio of ON and OFF of the switching means; and drive means for turning on and off the switching means on the basis of the switching signal.

According to the aspect, the first waveform obtained by modifying a shape of the reference waveform having a predetermined carrier frequency in a predetermined pattern is generated, and the switching signal for determining a duty ratio of ON and OFF of the switching means by using the first waveform and a voltage command is output. Turning-on and turning-off of the switching means of the switching circuit are controlled on the basis of the switching signal.

As mentioned above, according to the present aspect, a carrier frequency is changed in a predetermined frequency range, and thus the switching means of the switching circuit can cause a duty ratio to vary at random and thus cause a frequency to spread, compared with a case where a duty of ON and OFF is determined on the basis of the reference waveform.

Consequently, vibration energy generated from the inductive element provided in the switching circuit is distributed, and thus it is possible to reduce noise generated from the inductive element due to the carrier frequency.

According to the present aspect, a vibration proof rubber, a vibration proof nut, or the like attached to the inductive element, for reducing vibration of the inductive element, is not necessary. The present aspect enables cost and the number of components to be reduced.

Since the carrier frequency in the audible range is used, the converter control device can be implemented to have a simple configuration at low cost.

According to another aspect of the present disclosure, there is provided a converter control device of a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control device including reference waveform generation means for generating a reference waveform having a predetermined carrier frequency in an audible range; voltage command generation means for generating a voltage command; switching signal generation means for comparing the reference waveform with the voltage command, so as to output a switching signal for determining a duty ratio of ON and OFF of the switching means; and drive means for turning on and off the switching means on the basis of a changed switching signal obtained by deviating the center of a duty of the switching signal by a predetermined amount.

According to the present aspect, the reference waveform having a predetermined carrier frequency is generated, and turning-on and turning-off of the switching means of the switching circuit are controlled on the basis of the changed switching signal obtained by deviating the center of a duty by a predetermined amount with respect to the switching signal for determining a duty ratio of ON and OFF of the switching means by using the reference waveform and the voltage command.

As mentioned above, according to the present aspect, since the switching means is controlled on the basis of the changed switching signal obtained by deviating the center of a duty of the switching signal by a predetermined amount, the switching means of the switching circuit can spread a frequency at random compared with a case where the center of a duty of the switching signal is not deviated.

Consequently, vibration energy generated from the inductive element provided in the switching circuit is distributed, and thus it is possible to reduce noise generated from the inductive element due to the carrier frequency.

According to the present aspect, a vibration proof rubber, a vibration proof nut, or the like attached to the inductive element, for reducing vibration of the inductive element, is not necessary. The present aspect enables cost and the number of components to be reduced.

Since the carrier frequency in the audible range is used, the converter control device can be implemented to have a simple configuration at low cost.

In the aspect, the converter control device may further include spectrum distribution means for distributing a frequency spectrum of the carrier frequency to a predetermined frequency range in a predetermined period.

A frequency spectrum of a carrier frequency is distributed to a predetermined frequency range in a predetermined period, and thus vibration energy generated from the inductive element at each carrier frequency is distributed. According to the present aspect, a hearing feeling can be improved by reducing a sound level.

In the aspect, the first waveform generation means may generate the first waveform by changing an amplitude and/or a cycle of the reference waveform at random or by using a predetermined regularity.

According to the present aspect, the first waveform is generated by changing an amplitude and/or a cycle of the reference waveform at random or by using a predetermined regularity, and thus it is possible to easily generate the first waveform.

According to still another aspect of the present disclosure, there is provided a converter including any one of the converter control devices; a rectification circuit that converts AC power output from an AC power source into DC power; a smoothing circuit that is connected in parallel to the rectification circuit on a DC output side of the rectification circuit; and a switching circuit that includes an inductive element provided between the rectification circuit and the smoothing circuit, and switching means connected in parallel to the rectification circuit, in which the converter is connected between the AC power source and a load.

According to still another aspect of the present disclosure, there is provided an air conditioner including an outdoor machine; and the converter provided in the outdoor machine.

According to still another aspect of the present disclosure, there is provided a converter control method for a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control method including a step of generating a reference waveform having a predetermined carrier frequency in an audible range; a step of generating a first waveform by changing a shape of the generated reference waveform in a predetermined frequency range; a step of generating a voltage command; a step of comparing the first waveform with the voltage command, so as to output a switching signal for determining a duty ratio of ON and OFF of the switching means; and a step of turning on and off the switching means on the basis of the switching signal.

According to still another aspect of the present disclosure, there is provided a converter control program for a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control program causing a computer to execute a process of generating a reference waveform having a predetermined carrier frequency in an audible range; a process of generating a first waveform by changing a shape of the generated reference waveform in a predetermined frequency range; a process of generating a voltage command; a process of comparing the first waveform with the voltage command, so as to output a switching signal for determining a duty ratio of ON and OFF of the switching means; and a process of turning on and off the switching means on the basis of the switching signal.

According to still another aspect of the present disclosure, there is provided a converter control method for a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control method including a step of generating a reference waveform having a predetermined carrier frequency in an audible range; a step of generating a voltage command; a step of comparing the reference waveform with the voltage command, so as to output a switching signal for determining a duty ratio of ON and OFF of the switching means; and a step of turning on and off the switching means on the basis of a changed switching signal obtained by deviating the center of a duty of the switching signal by a predetermined amount.

According to still another aspect of the present disclosure, there is provided a converter control program for a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control program causing a computer to execute a process of generating a reference waveform having a predetermined carrier frequency in an audible range; a process of generating a voltage command; a process of comparing the reference waveform with the voltage command, so as to output a switching signal for determining a duty ratio of ON and OFF of the switching means; and a process of turning on and off the switching means on the basis of a changed switching signal obtained by deviating the center of a duty of the switching signal by a predetermined amount.

### Advantageous Effects of Invention

The present invention achieves an effect of being capable of providing a cheap converter device by reducing noise generated from an inductive element while using a carrier frequency in the audible range.

### Brief Description of Drawings

Fig. 1 is a diagram illustrating a schematic configuration of a motor drive apparatus according to a first embodiment of the present disclosure.
Fig. 2 is a diagram illustrating an example of a frequency characteristic of a sound generated from an inductive element.
Fig. 3 is a functional block diagram of a converter control device according to the first embodiment of the present disclosure.
Fig. 4(a) is a diagram illustrating an example of a reference waveform of a triangular wave according to the first embodiment of the present disclosure, and Fig. 4(b) is a diagram illustrating a switching signal based on the reference waveform.
Fig. 5(a) is a diagram illustrating an example of a first waveform according to the first embodiment of the present disclosure, and Fig. 5(b) is a diagram illustrating a switching signal based on the first waveform.
Fig. 6 is a diagram illustrating an example of a simulation result of an input current waveform for a converter device according to the present embodiment during a rated load.
Fig. 7 is a diagram illustrating an input current waveform through comparison between a frequency analysis result and a noise regulation value.
Fig. 8 illustrates a scene in which a spectrum stands at a frequency.
Fig. 9 is a diagram illustrating an example in which a spectrum is distributed.
Fig. 10 is a diagram illustrating a schematic configuration of a motor drive apparatus according to a second embodiment of the present disclosure.
Fig. 11 is a functional block diagram of a converter control device according to the second embodiment of the present disclosure.
Fig. 12 is a diagram illustrating an example of a triangular wave according to a third embodiment of the present disclosure.
Fig. 13 is a functional block diagram of a converter control device according to a fourth embodiment of the present disclosure.
Fig. 14 illustrates an example of a switching signal according to the fourth embodiment of the present disclosure.
Fig. 15 illustrates an example of spectrum conversion according to a fifth embodiment of the present disclosure.

### Description of Embodiments

Hereinafter, embodiments of a converter control device, a converter provided with the converter control device, an air conditioner, a converter control method, and a converter control program according to an aspect of the present disclosure will be described with reference to the accompanying drawings.

### [First Embodiment]

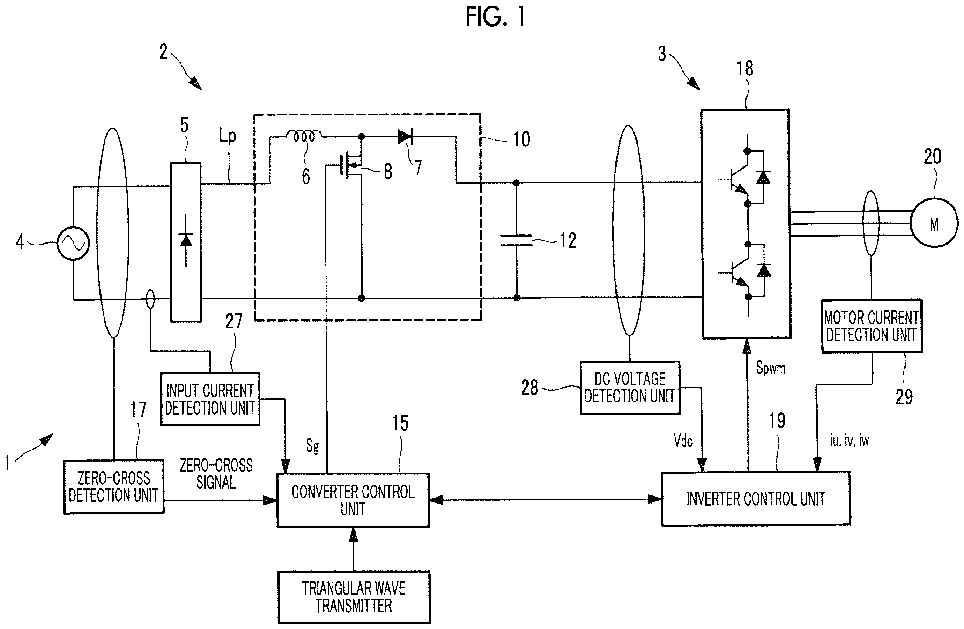

Hereinafter, a description will be made of a first embodiment of the present disclosure with reference to Fig. 1.

Fig. 1 illustrates an example of a schematic configuration of a motor drive apparatus according to the present embodiment.

As illustrated in Fig. 1, a motor drive apparatus 1 includes, as principal constituent elements, a converter device (converter) 2 which converts AC power from an AC power source 4 into DC power which is then output, and an inverter device 3 which converts the DC power output from the converter device 2 into three-phase AC power which is then output to a compressor motor (load) 20.

In the present embodiment, a description will be made of a case where the motor drive apparatus 1 drives the compressor motor 20 provided in an outdoor machine of an air conditioner (not illustrated), but the present disclosure is not limited thereto.

The converter device 2 includes a rectification circuit 5 which converts AC power output from the AC power source 4 into DC power, a smoothing capacitor (smoothing circuit) 12 which is connected in parallel to the rectification circuit 5 on a DC output side of the rectification circuit 5, and smooths a voltage, a switching circuit 10 which is provided between the rectification circuit 5 and the smoothing capacitor 12, and a converter control unit (converter control device) 15 which controls the switching circuit 10.

An input current detection unit 27 which detects an input current is provided between the AC power source 4 and the rectification circuit 5. An input current signal from the input current detection unit 27 is output to the converter control unit 15, and thus an input waveform S is obtained.

The switching circuit 10 has a reactor (inductive element) 6 which is provided in series in a positive bus Lp connecting the rectification circuit 5 to the smoothing capacitor 12, a diode 7 which is connected in series to a current output side of the reactor 6, and a switching element 8 which has one end connected between the reactor 6 and the diode 7, and is connected in parallel to the rectification circuit 5. The reactor 6 is not limited to the positive bus Lp, may be provided in a negative bus, and may be provided in both of the positive bus Lp and a negative bus.

Examples of the switching element 8 may include an insulated gate bipolar transistor (IGBT) and a field effect transistor (FET). Switching of the switching element 8 is controlled by the converter control unit 15.

The AC power source 4 is provided with a zero-cross detection unit 17 which detects a zero-cross point. A zero-cross signal from the zero-cross detection unit 17 is output to the converter control unit 15.

The inverter device 3 includes a bridge circuit 18 having six switching elements, and an inverter control unit 19 controlling turning-on and turning-off of the switching elements of the bridge circuit 18. The inverter control unit 19 generates a gate drive signal Spwm for each switching element on the basis of a request rotational speed command which is input from, for example, a host apparatus (not illustrated), and sends the gate drive signal to the bridge circuit 18. Examples of a specific method for inverter control may include vector control, sensorless vector control, V/F control, overmodulation control, and single-pulse control.

In order to realize the above-described control, a DC voltage detection unit 28 which detects an input DC voltage Vdc of the bridge circuit 18, and a motor current detection unit 29 which detects respective phase currents iu, iv, and iw flowing through the compressor motor 20 are provided. Such detected values Vdc, iu, iv, and iw are input to the inverter control unit 19. Here, the motor current detection unit 29 may detect a current flowing through a negative side power line between the bridge circuit 18 and the smoothing capacitor 12, and acquire the phase currents iu, iv, and iw from the detected signal.

Each of the converter control unit 15 and the inverter control unit 19 is, for example, a micro-processing unit (MPU), and has a non-transitory computer readable recording medium in which a program for executing each process is recorded. Each process is performed by a CPU reading the program recorded on the recording medium to a main storage device such as a RAM, and executing the program. The computer readable recording medium may include, for example, a magnetic disk, a magnetooptical disc, and a semiconductor memory.

The converter control unit 15 and the inverter control unit 19 may be implemented by a single MPU, and may be implemented separate MPUs.

The converter device 2 in Fig. 1 uses a lower limit value as a carrier frequency instead of an upper limit value in an upper-lower limit range in which a switching frequency satisfying a harmonic regulation value is set to the lower limit value, and a switching frequency satisfying a noise regulation value is set to the upper limit value, during a normal load. In a case where the converter device 2 in Fig. 1 is subjected to switching at the carrier frequency, the reactor 6 vibrates at the carrier frequency. As a result, a baffle plate attached with the reactor 6 is caused to vibrate, and thus sounds are generated at the carrier frequency in the audible range and frequencies of n times thereof.

The carrier frequency in the present embodiment is assumed to be a carrier frequency in the audible range.

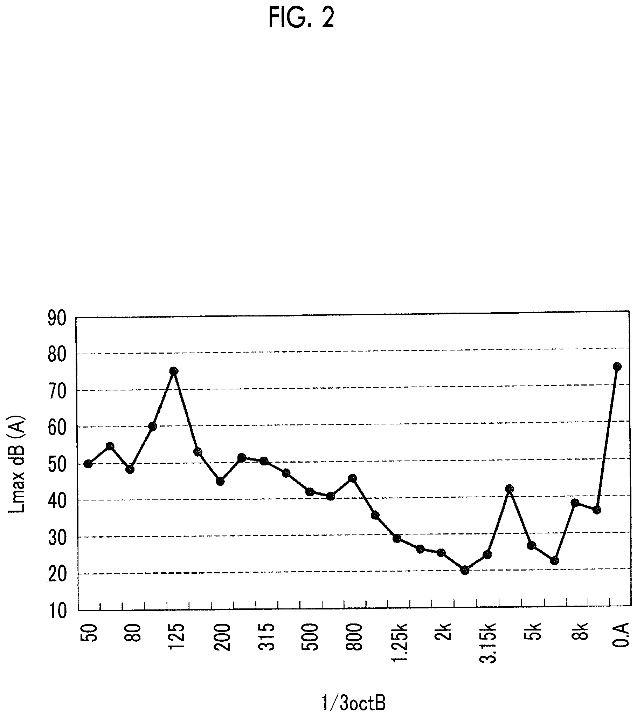

Fig. 2 illustrates a frequency characteristic of a reactor sound with a transverse axis as a carrier frequency (Hz) and a longitudinal axis as a measurement result of the reactor sound of the reactor 6. As illustrated in Fig. 2, the maximum values of sounds of the reactor 6 appear around 4 kHz and 8 kHz.

In the present embodiment, a description will be made of the converter control unit 15 reducing sounds generated from the reactor 6.

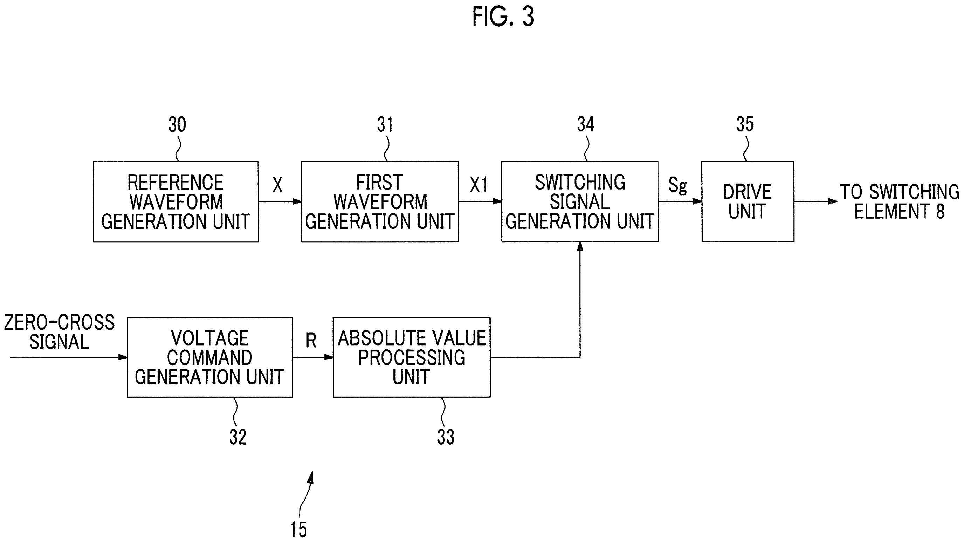

Fig. 3 is a functional block diagram of the converter control unit 15 according to the present embodiment.

As illustrated in Fig. 3, the converter control unit 15 includes a reference waveform generation unit (reference waveform generation means) 30, a first waveform generation unit (first waveform generation means) 31, a voltage command generation unit (voltage command generation means) 32, an absolute value processing unit 33, a switching signal generation unit (switching command generation means) 34, and a drive unit (drive means) 35.

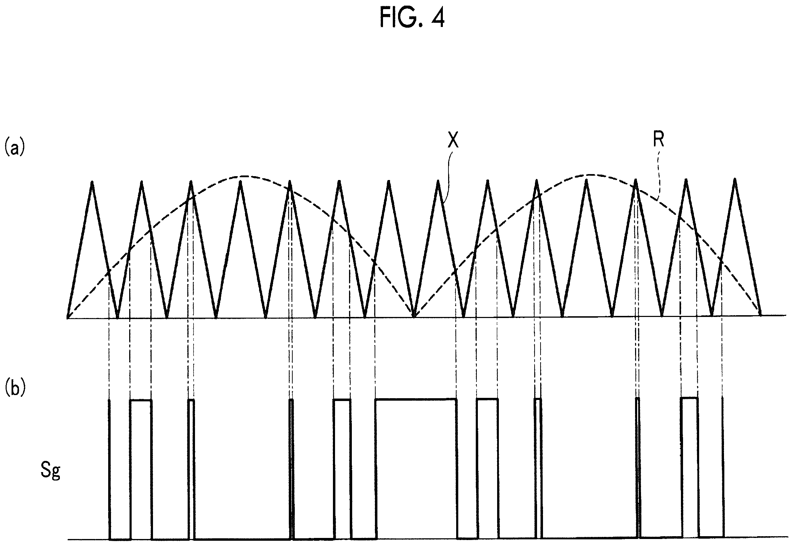

The reference waveform generation unit 30 is, for example, a triangular wave transmitter, and generates a reference waveform (for example, a triangular wave) X having a predetermined carrier frequency (refer to Fig. 4(a)). The carrier frequency is set to a frequency closer to a lower limit value than an upper limit value in a switching frequency range in which a switching frequency satisfying a harmonic regulation value is set to the lower limit value, and a switching frequency satisfying a noise regulation value is set to the upper limit value. Here, in a case where of an air conditioner, IEC61000-3-2 is an example of the standard of the harmonic regulation value. CISPR14-1 is an example of the standard of the noise regulation value. As mentioned above, in an upper-lower limit range of a switching frequency for clearing the corresponding noise regulation value and harmonic regulation value, a frequency close to the lower limit value is employed, in other words, a switching frequency is reduced without limit, and thus it is possible to reduce a loss due to switching as much as possible.

In a case of an air conditioner, in a case where the harmonic regulation is satisfied, switching may not be performed. In a case where actual switching is performed, for example, a switching frequency is preferably determined in a range of about 100 Hz or more to 5 kHz or less.

Fig. 4(b) illustrates an example of a switching signal generated on the basis of the reference waveform X. For example, a switching signal Sg for causing an ON state in a section in which a first waveform X1 is more than a sine wave voltage command R, and causing an OFF state in a section in which the first waveform X1 is less than the sine wave voltage command R, is generated.

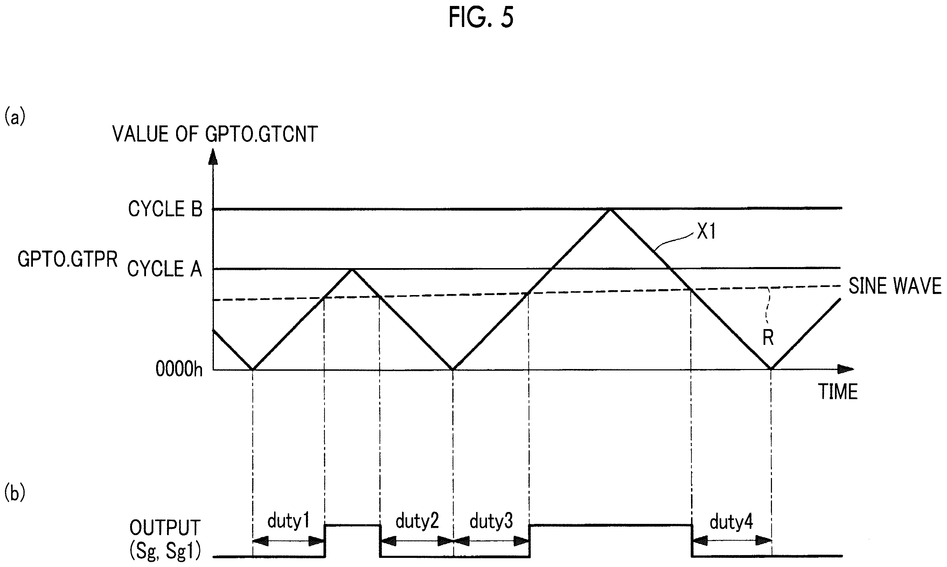

The first waveform generation unit 31 generates the first waveform X1 in which a shape of the reference waveform X generated by the reference waveform generation unit 30 is changed in a predetermined frequency range. Specifically, the first waveform generation unit 31 changes the magnitude of the reference waveform X at random or by using a predetermined regularity. In other words, an amplitude and/or a cycle of the reference waveform X are (is) changed at random or by using a predetermined regularity, and thus the first waveform X1 is generated (refer to Fig. 5(a)). Fig. 5(a) illustrates an example of a partially enlarged view of a waveform obtained by changing an amplitude and a cycle of the reference waveform X illustrated in Fig. 4(a) at random or by using a predetermined regularity.

The voltage command generation unit 32 generates the sine wave voltage command R on the basis of a zero-cross signal from the zero-cross detection unit 17, and a converter control phase (a phase difference with a power source voltage) and a voltage command amplitude value therefor which are registered in advance.

The absolute value processing unit 33 inverts a negative side waveform in the sine wave voltage command R generated by the voltage command generation unit 32 so as to generate a positive side waveform. Consequently, a waveform of the voltage command R as illustrated in Figs. 4(a) and 5(a) is generated. Fig. 5(a) illustrates an enlarged part of the first waveform X1, and thus does not illustrate the whole thereof, but the line of the voltage command R shows only a positive side waveform as illustrated in Fig. 4(a).

As illustrated in Figs. 5(a) and 5(b), the switching signal generation unit 34 compares the first waveform X1 from the first waveform generation unit 31 with the voltage command R obtained by inverting the negative side waveform, output from the absolute value processing unit 33, and generates the switching signal Sg for controlling the switching circuit 10 on the basis of a comparison result. Specifically, the switching signal Sg which causes switching between an ON state and an OFF state at an intersection between the triangular wave and the sine wave voltage command R illustrated in Fig. 5(a) is illustrated in Fig. 5(b). For example, the switching signal generation unit 34 generates the switching signal Sg which causes an ON state in a section in which the first waveform X1 is more than the sine wave voltage command R, and causes an OFF state in a section in which the first waveform X1 is less than the sine wave voltage command R, to determine a duty ratio of ON and OFF of the switching element 8.

The drive unit 35 turns on and turns off the switching element 8 of the switching circuit 10 on the basis of the switching signal Sg. The switching signal Sg generated by the switching signal generation unit 34 is applied to a gate circuit (not illustrated) driving the switching element 8 by the drive unit 35, and the gate circuit is driven on the basis of the signal such that turning-on and turning-off of the switching element 8 are controlled.

Hereinafter, with reference to Figs. 1 to 5, a description will be made of an operation of the converter control unit 15 according to the present embodiment.

First, a zero-cross point of the AC power source 4 is detected by the zero-cross detection unit 17, and a zero-cross signal is input to the converter control unit 15. The voltage command generation unit 32 of the converter control unit 15 generates the sine wave voltage command R on the basis of the input zero-cross signal, a converter control phase (information regarding a phase difference with an input voltage) registered in advance, and a preset voltage command amplitude value. The voltage command R is output to the absolute value processing unit 33, and a voltage command obtained by inverting a negative side waveform to a positive side waveform is generated.

On the other hand, the reference waveform generation unit 30 generates the reference waveform X which is a triangular wave having a predetermined carrier frequency, and outputs the reference waveform X to the first waveform generation unit 31. The first waveform generation unit 31 generates the first waveform X1 by changing a cycle and/or an amplitude of the reference waveform X at random or a predetermined regularity, and outputs the generated first waveform X1 to the switching signal generation unit 34.

As illustrated in Figs. 5(a) and 5(b), the switching signal generation unit 34 compares the first waveform X1 with the voltage command R from the absolute value processing unit 24, so as to generate the switching signal Sg. Consequently, turning-on and turning-off of the switching element 8 are controlled on the basis of the switching signal Sg.

As described above, according to the converter control unit 15 of the present embodiment, the converter device 2 including the converter control unit, a converter control method, and a converter control program, the first waveform X1 obtained by modifying a shape of the reference waveform X having a predetermined carrier frequency in a predetermined pattern (for example, modifying a amplitude and/or a cycle of the reference waveform X at random) is generated, and the switching signal Sg for determining a duty ratio of ON and OFF of the switching element 8 by using the first waveform X1 and the voltage command R is output. Turning-on and turning-off of the switching element 8 of the switching circuit 10 are controlled on the basis of the switching signal Sg.

As mentioned above, according to the present embodiment, a carrier frequency is changed in a predetermined frequency range, and thus the switching element 8 of the switching circuit 10 can cause a duty ratio to vary at random and thus cause a frequency to spread, compared with a case where a duty of ON and OFF is determined on the basis of the reference waveform X. Consequently, vibration energy generated from the reactor 6 provided in the switching circuit 10 is distributed, and thus it is possible to reduce noise generated from the reactor 6 due to the carrier frequency. According to the present embodiment, a vibration proof rubber, a vibration proof nut, or the like attached to the reactor 6, for reducing vibration of the reactor 6, is not necessary, and thus it is possible to reduce cost and the number of components.

Since the carrier frequency in the audible range is used, the converter control unit 15 can be implemented to have a simple configuration at low cost.

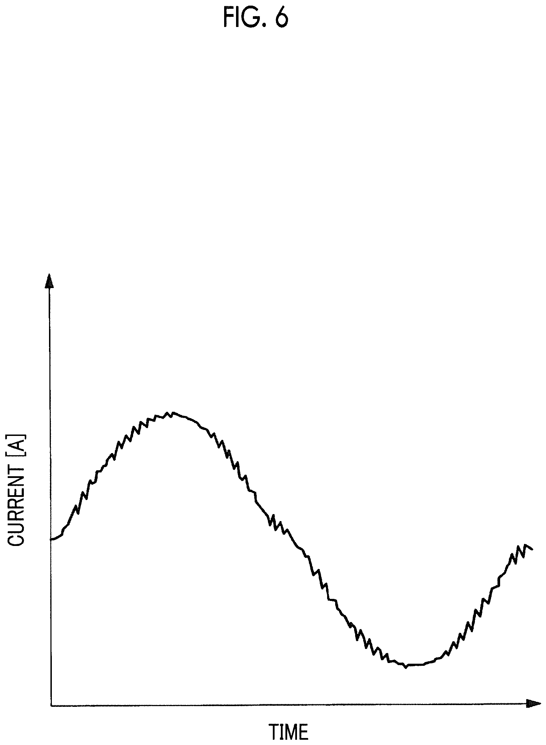

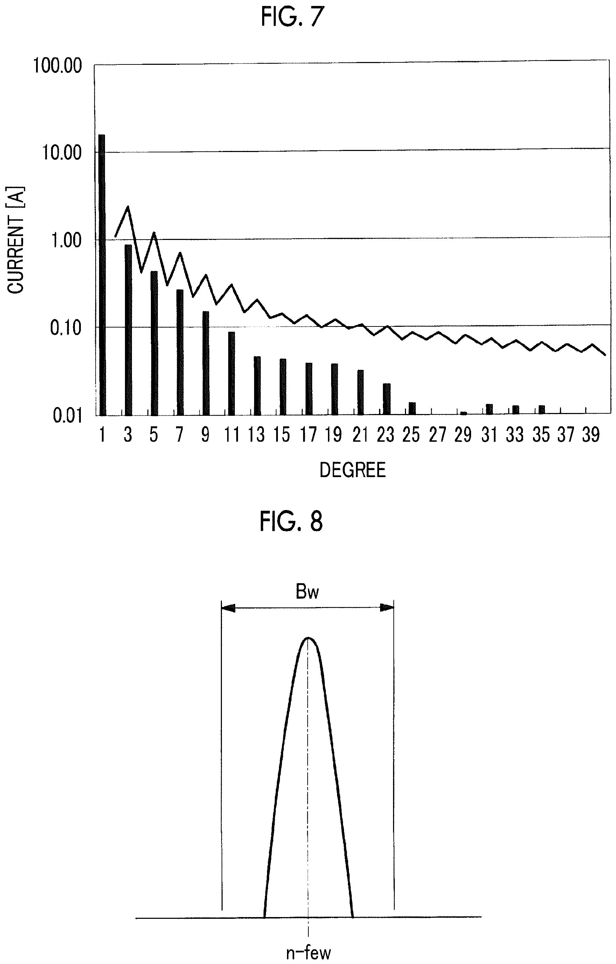

Here, Fig. 6 is a diagram illustrating an example of a simulation result of an input current waveform of the converter device according to the present embodiment during a rated load, and Fig. 7 is a diagram illustrating comparison between a result of analyzing a frequency of the input current waveform illustrated in Fig. 6 and a noise regulation value. In Fig. 6, a longitudinal axis expresses a current (A), and a transverse axis expresses time. In Fig. 7, a longitudinal axis expresses a current (A), a transverse axis expresses a degree, a bar graph represents a result of analyzing a frequency of the input current waveform, and a line graph represents a noise regulation value.

As illustrated in Fig. 6, according to the converter device 2 of the present embodiment, the input current waveform with less ripples is obtained. As illustrated in Fig. 7, it can be seen that harmonic regulation values are cleared in all degrees (the bar graphs are lower than the line graphs).

Fig. 8 illustrates a scene in which a spectrum stands at a certain frequency, and illustrates a sound level (the magnitude of a sound) of the reactor 6 acquired from a microphone or the like at a fixed frequency in the present embodiment.

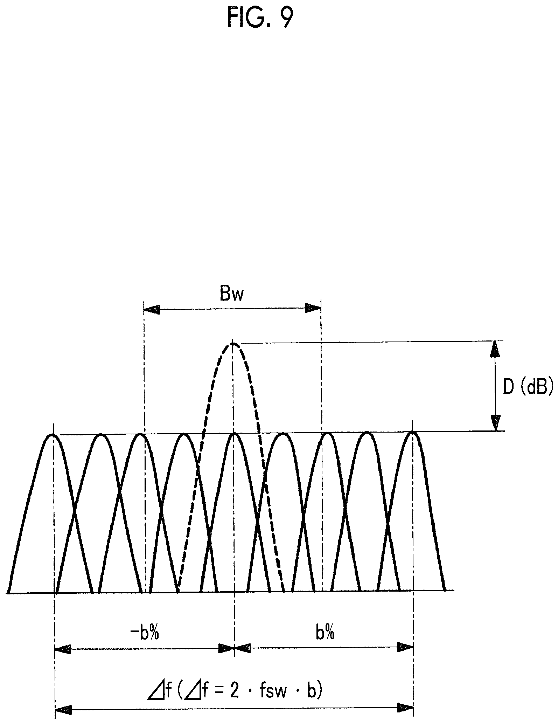

Fig. 9 illustrates movement of a spectrum waveform of the reactor 6 when a frequency is changed, acquired from a microphone or the like. A fundamental wave indicated by a dotted line in Fig. 9 represents a spectrum waveform caused by the reactor at a fixed frequency. In a case where a switching frequency is spread regularly with a frequency spread width Δf, waveforms with levels indicated by solid lines are obtained (refer to Fig. 9). As illustrated in Fig. 9, in a case where a sound generated from the reactor is distribution on average, an effect of reducing the sound by D [dB] with respect to a frequency of the fundamental wave can be expected.

### [Second Embodiment]

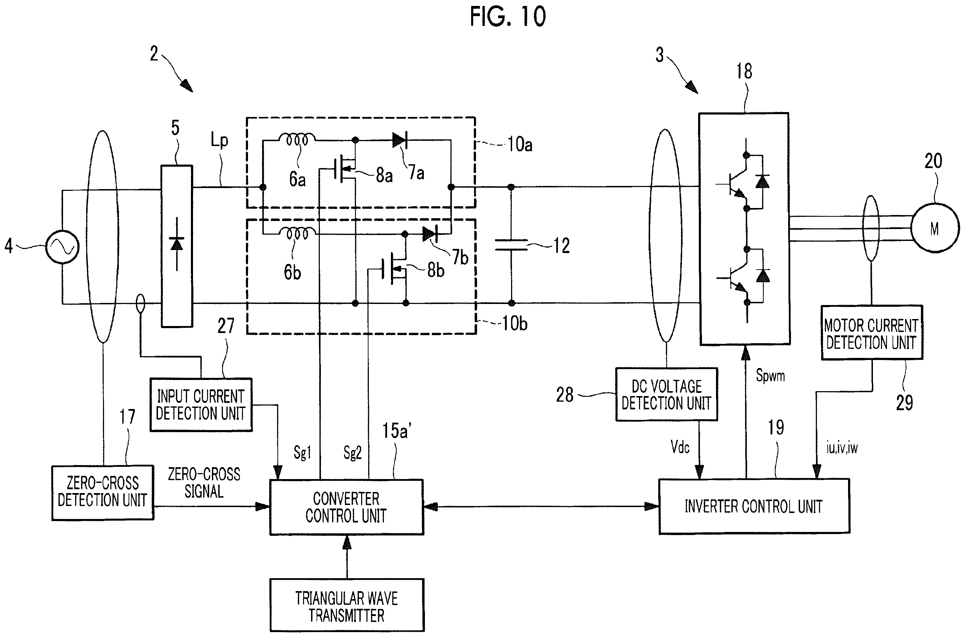

Next, a description will be made of a converter control device according to a second embodiment of the present disclosure, a converter provided with the converter control device, a converter control method, and a converter control program. The present embodiment is different from the first embodiment in that a plurality of switching circuits are provided in parallel. Hereinafter, with respect to the converter control device of the present embodiment, the converter provided with the converter control device, the converter control method, and the converter control program, a description of portions common to the first embodiment will be omitted, and differences will be focused. In the present embodiment, the description will be made with reference to Figs. 10, 11, and Figs. 5(a) and 5(b).

Fig. 10 illustrates a schematic configuration of a motor drive apparatus according to the present embodiment.

As illustrated in Fig. 10, a motor drive apparatus 1 includes, as principal constituent elements, a converter device 2 which converts AC power from an AC power source 4 into DC power which is then output, and an inverter device 3 which converts the DC power output from the converter device 2 into three-phase AC power which is then output to a compressor motor (load) 20.

The converter device 2 includes a rectification circuit 5 which converts AC power output from the AC power source 4 into DC power, a smoothing capacitor (smoothing circuit) 12 which is connected in parallel to the rectification circuit 5 on a DC output side of the rectification circuit 5, and smooths a voltage, two switching circuits 10a and 10b which are provided in parallel between the rectification circuit 5 and the smoothing capacitor 12, and a converter control unit (converter control device) 15' which controls the switching circuits 10a and 10b.

An input current detection unit 27 which detects an input current is provided between the AC power source 4 and the rectification circuit 5. An input current signal from the input current detection unit 27 is output to the converter control unit 15, and thus an input waveform S is obtained.

The switching circuit 10a has a reactor 6a which is provided in series in a positive bus Lp connecting the rectification circuit 5 to the smoothing capacitor 12, a diode 7a which is connected in series to a current output side of the reactor 6a, and a switching element 8a which has one end connected between the reactor 6a and the diode 7a, and is connected in parallel to the rectification circuit 5.

The switching circuit 10b has a reactor 6b which is provided in series in the positive bus Lp connecting the rectification circuit 5 to the smoothing capacitor 12, a diode 7b which is connected in series to a current output side of the reactor 6b, and a switching element 8b which has one end connected between the reactor 6b and the diode 7b, and is connected in parallel to the rectification circuit 5.

Examples of the switching elements 8a and 8b may include an IGBT and a field effect transistor. Switching of the switching elements 8a and 8b is controlled by the converter control unit 15'.

The switching circuits 10a and 10b in Fig. 10 employ a parallel pulse amplitude modulation (PAM) method, and are different from each other in terms of mutual conduction timings as interleave circuits.

In the following description, in a case where the switching circuits 10 are differentiated from each other, either one of a or b is given to the end thereof, and, in a case where switching circuits 10 are not differentiated from each other, a or be is omitted.

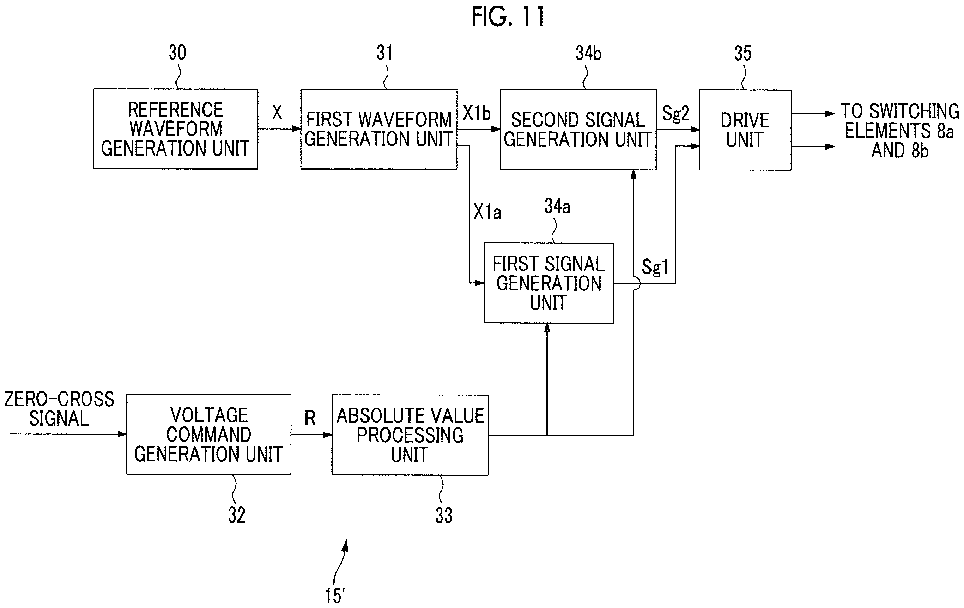

As illustrated in Fig. 11, the converter control unit 15' includes a reference waveform generation unit 30, a first waveform generation unit 31, a voltage command generation unit 32, an absolute value processing unit 33, a first signal generation unit 34a, a second signal generation unit 34b, and a drive unit 35. The reference waveform generation unit 30, the first waveform generation unit 31, the voltage command generation unit 32, the absolute value processing unit 33, and the drive unit 35 are the same as those in the first embodiment, and thus descriptions thereof will be omitted.

The first waveform generation unit 31 generates first waveforms X1a and X1b in which a shape of the reference waveform X generated by the reference waveform generation unit 30 is changed in a predetermined frequency range. Specifically, the first waveform generation unit 31 changes the magnitude of each of the first waveforms X1a and X1b at random or by using a predetermined regularity, that is, changes an amplitude and/or a cycle of the reference waveform X at random or by using a predetermined regularity in order to control turning-on and turning-off of the plurality of switching elements 8a and 8b, and thus generates the first waveforms X1a and X1b.

As illustrated in Figs. 5(a) and 5(b), the first signal generation unit 34a compares the first waveform X1 from the first waveform generation unit 31 with a voltage command obtained by inverting a negative side waveform, output from the absolute value processing unit 33, and generates a first switching signal Sg1 for controlling the switching circuit 10 on the basis of a comparison result. Specifically, the first switching signal Sg1 which causes switching between an ON state and an OFF state at an intersection between the triangular wave and the sine wave voltage command R illustrated in Fig. 5(a) is illustrated in Fig. 5(b).

The second signal generation unit 34b compares the first waveform X1b which is different (for example, in terms of a phase of 180°) from the first waveform X1a generated by the first signal generation unit 25 with a voltage command R obtained by inverting a negative side waveform, output from the absolute value processing unit 33, and generates a second switching signal Sg2 for controlling the switching circuit 10b on the basis of a comparison result.

An amplitude and/or a cycle of the first waveform X1b used in the second signal generation unit 34b are (is) different from an amplitude and/or a cycle of the first waveform X1a used in the first signal generation unit 34a, but the first waveform X1b is the same as illustrated in Figs. 5(a) and 5(b) in that an amplitude and/or a cycle is changed at random or by using a predetermined regularity, and thus the second switching signal Sg2 is not illustrated.

In other words, each of the first switching signal Sg1 and the second switching signal Sg2 is a signal generated on the basis of the first waveforms X1a and X1b which are generated by changing a magnitude of a triangular wave at random or by using a predetermined regularity.

In a case of control in an interleave circuit, any shapes of the first waveforms X1a and X1b may be used as long as a phase of the first switching signal Sg1 and a phase of the second switching signal Sg2 are inverted by 180°. In other words, shapes of the first waveforms X1a and X1b may be the same as each other. Here, factors to change a magnitude of a triangular wave for generating the first waveforms X1a and X1b at random or by using a predetermined regularity may be common to the first waveforms X1a and X1b.

As mentioned above, the first switching signal Sg1 and the second switching signal Sg2 generated by changing a magnitude of a triangular wave at random or by using a predetermined regularity have distributed carrier frequencies, compared with a case where a magnitude of a triangular wave is constant. The first switching signal Sg1 and the second switching signal Sg2 can distribute vibration energy generated from the reactors 6a and 6b. Consequently, the converter device 2 can be implemented to have a simple configuration at low cost, and sounds generated from the reactors 6a and 6b can be reduced.

### [Third Embodiment]

Next, a description will be made of a converter control device according to a third embodiment of the present disclosure, a converter provided with the converter control device, an air conditioner, a converter control method, and a converter control program. The present embodiment is different from the first embodiment in terms of a method of providing a triangular wave. Hereinafter, with respect to the present embodiment, a description of portions common to the first and second embodiments will be omitted, and differences will be focused.

The present embodiment may be applied to a case where the switching circuit 10 is alone as in the first embodiment, and may be applied to a case where the switching circuits 10a and 10b are connected in parallel to each other as in the second embodiment.

In the present embodiment, a description will be made of a case where the first waveform X1 generated on the basis of a triangular wave having the reference waveform X is generated by changing only a cycle of the reference waveform X without changing an amplitude thereof.

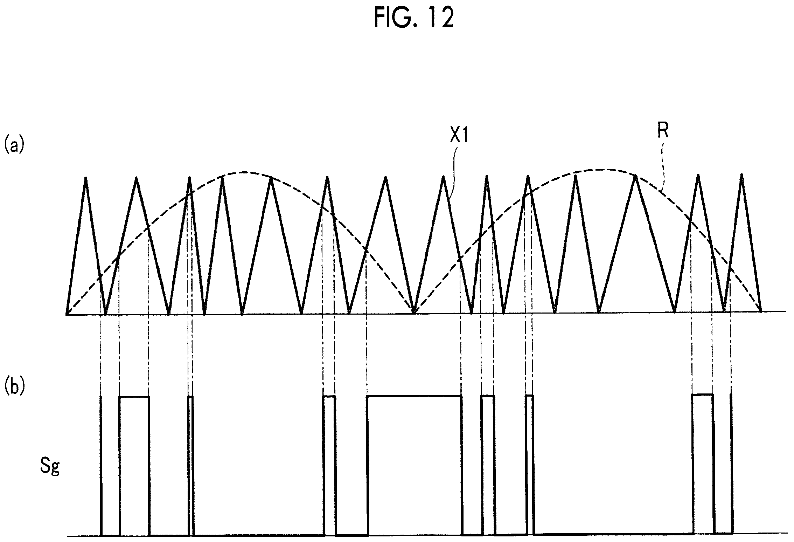

Fig. 12 illustrates an example of the first waveform X1 according to the present embodiment.

As illustrated in Fig. 12, in the present embodiment, a length of the base of the triangular wave having the reference waveform X as illustrated in Fig. 4(a) is changed at random or by using a predetermined regularity. In other words, a cycle of the triangular wave is changed at random or by using a predetermined regularity, and thus a frequency is spread.

As mentioned above, the first waveform X1 is generated by changing an amplitude and/or a cycle of the reference waveform X at random or by using a predetermined regularity, and thus the simple first waveform X1 can be generated.

### [Fourth Embodiment]

Next, a description will be made of a converter control device according to a fourth embodiment of the present disclosure, a converter provided with the converter control device, an air conditioner, a converter control method, and a converter control program. The present embodiment is different from the first, second, and third embodiments in terms of a method of providing a duty. Hereinafter, with respect to the present embodiment, a description of portions common to the first, second, and third embodiments will be omitted, and differences will be focused.

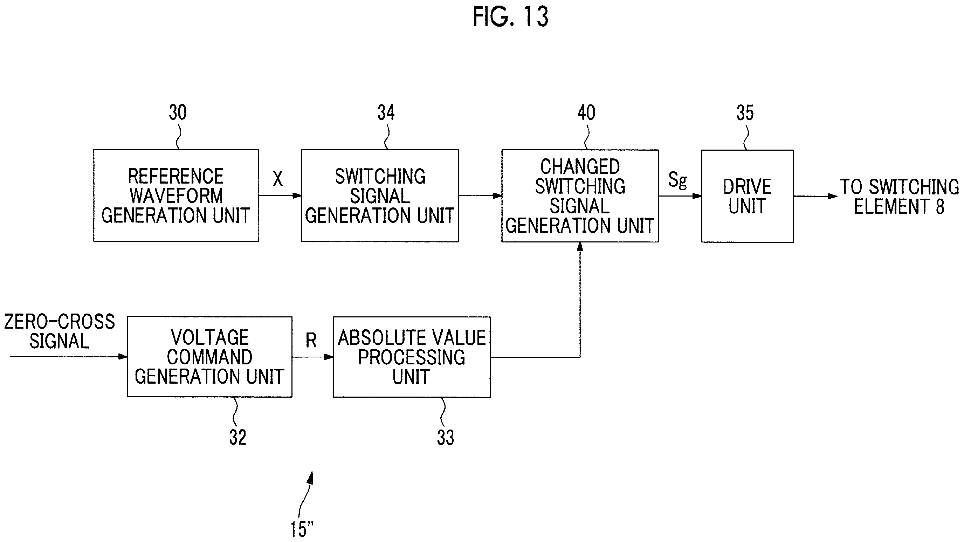

Fig. 13 is a functional block diagram of a converter control device according to the present embodiment. The converter control unit (converter control device) 15" includes a reference waveform generation unit (reference waveform generation means) 30, a voltage command generation unit (voltage command generation means) 32, a switching signal generation unit (switching signal generation means) 34, an absolute value processing unit 33, a changed switching signal generation unit (changed switching signal generation means) 40, and a drive unit (drive means) 35. The reference waveform generation unit 30, the voltage command generation unit 32, the switching signal generation unit 34, the absolute value processing unit 33, and the drive unit 35 are the same as those in the first to third embodiments, and thus descriptions thereof will be omitted.

The changed switching signal generation unit 40 generates a changed switching signal obtained by deviating a duty of the switching signal Sg by a predetermined amount.

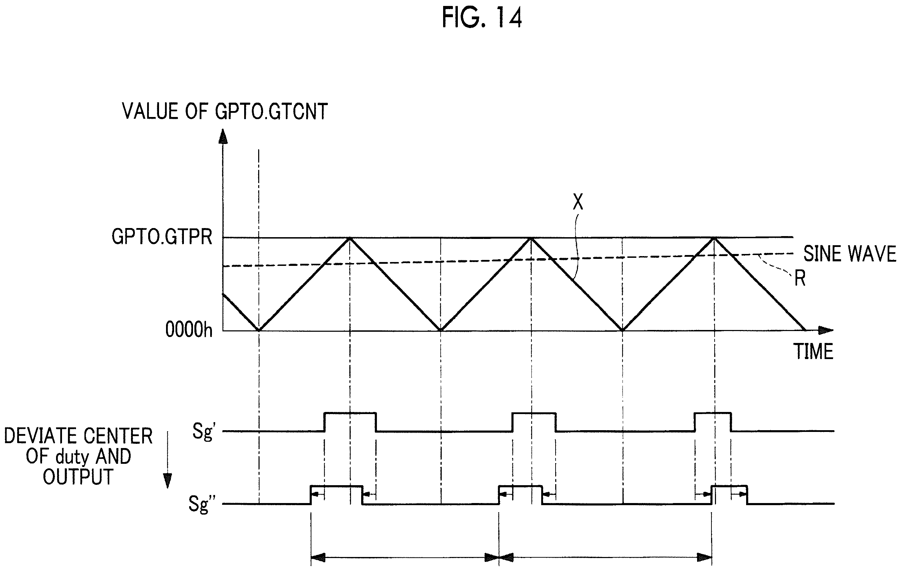

Specifically, Fig. 14 illustrates an example of a switching signal according to the present embodiment.

In Fig. 14, the switching signal generation unit 34 compares, for example, the reference waveform X with the voltage command R, and generates a switching signal Sg' for causing an ON state in a section in which the reference waveform X is more than the sine wave voltage command R, and causing an OFF state in a section in which the reference waveform X is less than the sine wave voltage command R.

The changed switching signal generation unit 40 deviates and outputs the center of a duty of the switching signal Sg' generated by the switching signal generation unit 34, and uses the deviated result as a changed switching signal Sg".

As mentioned above, the reference waveform X having a predetermined carrier frequency is generated, and turning-on and turning-off of the switching element 8 of the switching circuit 10 are controlled on the basis of the changed switching signal Sg" obtained by deviating the center of a duty by a predetermined amount with respect to the switching signal Sg' for determining a duty ratio of ON and OFF of the switching element 8 by using the reference waveform X and the voltage command R.

As mentioned above, according to the present disclosure, since the switching element 8 is controlled on the basis of the changed switching signal Sg" obtained by deviating the center of a duty of the switching signal Sg' by a predetermined amount, the switching element 8 of the switching circuit 10 can spread a frequency at random compared with a case where the center of a duty of the switching signal Sg' is not deviated. Consequently, vibration energy generated from the reactor 6 provided in the switching circuit 10 is distributed, and thus it is possible to reduce noise generated from the reactor 6 due to the carrier frequency.

According to the present disclosure, a vibration proof rubber, a vibration proof nut, or the like attached to the reactor 6, for reducing vibration of the reactor 6, is not necessary, and thus it is possible to reduce cost and the number of components.

In the present embodiment, a description has been made of an example of a case where the switching circuit 10 is alone, but the present disclosure is not limited thereto, and may be applied to a configuration in which a plurality of switching circuits 10 are connected in parallel to each other.

### [Fifth Embodiment]

Next, a description will be made of a converter control device according to a fifth embodiment of the present disclosure, a converter provided with the converter control device, an air conditioner, a converter control method, and a converter control program. The present embodiment is different from the first, second, third, and fourth embodiments in terms of spectrum conversion for a carrier frequency. Hereinafter, with respect to the present embodiment, a description of portions common to the first, second, third, and fourth embodiments will be omitted, and differences will be focused.

In the present embodiment, a spectrum distribution unit (spectrum distribution means) (not illustrated) is provided.

The spectrum distribution unit distributes a frequency spectrum of a carrier frequency to a predetermined frequency range in a predetermined period.

As mentioned above, since a frequency spectrum of a carrier frequency is distributed to a predetermined frequency range in a predetermined period, and thus vibration energy generated from the reactor 6 at each carrier frequency is distributed, a hearing feeling is improved by reducing a sound level.

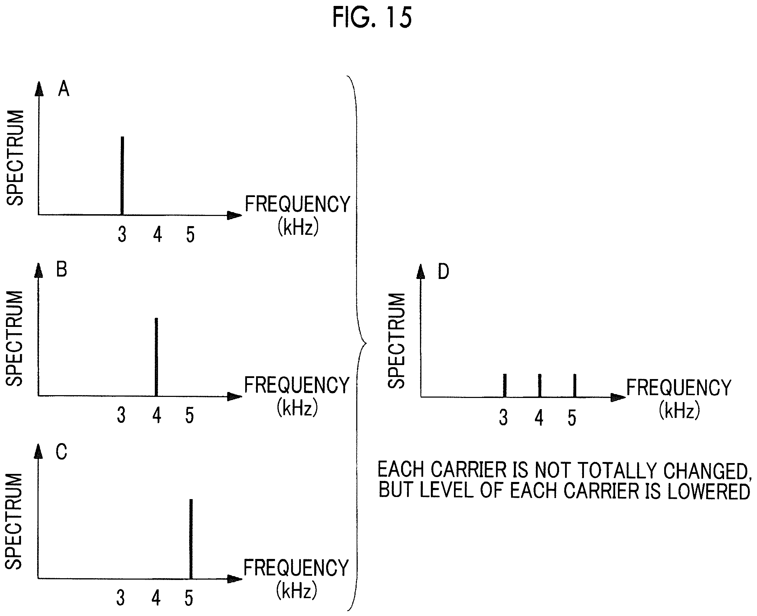

Fig. 15 illustrates an example of spectrum conversion for a carrier frequency according to the present embodiment.

As illustrated in Fig. 15, a frequency spectrum of a carrier frequency is distributed to a predetermined frequency range in a predetermined period.

As mentioned above, each carrier frequency is not totally changed, but it is clear that a level of each carrier frequency is lowered in a predetermined frequency range (frequency band).

As mentioned above, the embodiments of the present disclosure have been described in detail with reference to the drawings, but a specific configuration is not limited to the embodiments, and also include design changes or the like within the scope without departing from the spirit of the present disclosure. For example, a single component may be configured by using a power factor circuit (PFC) controller, a triangular wave oscillator for PFC, and a microcomputer or a digital signal processor (DSP), and may be used for various electronic devices including a switching power source.

The first embodiment to the fifth embodiment may be combined with each other as appropriate.

For example, the configuration of the first embodiment may be combined with the configuration of the third embodiment, and the configuration of the fourth embodiment may be combined with the configuration of the fifth embodiment.

### Reference Signs List

- 1: MOTOR DRIVE APPARATUS
- 2: CONVERTER DEVICE
- 3: INVERTER DEVICE
- 4: AC POWER SOURCE
- 5: RECTIFICATION CIRCUIT
- 6, 6a, AND 6b: REACTOR (INDUCTIVE ELEMENT)
- 10, 10a, AND 10b: SWITCHING CIRCUIT
- 12: SMOOTHING CAPACITOR (SMOOTHING CIRCUIT)
- 15: CONVERTER CONTROL UNIT (CONVERTER CONTROL DEVICE)

## Claims

1. A converter control device of a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control device comprising:
reference waveform generation means for generating a reference waveform having a predetermined carrier frequency in an audible range;
first waveform generation means for generating a first waveform by changing a shape of the reference waveform generated by the reference waveform generation means in a predetermined frequency range;
voltage command generation means for generating a voltage command;
switching signal generation means for comparing the first waveform with the voltage command, so as to output a switching signal for determining a duty ratio of ON and OFF of the switching means; and
drive means for turning on and off the switching means on the basis of the switching signal.

2. A converter control device of a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control device comprising:
reference waveform generation means for generating a reference waveform having a predetermined carrier frequency in an audible range;
voltage command generation means for generating a voltage command;
switching signal generation means for comparing the reference waveform with the voltage command, so as to output a switching signal for determining a duty ratio of ON and OFF of the switching means; and
drive means for turning on and off the switching means on the basis of a changed switching signal obtained by deviating the center of a duty of the switching signal by a predetermined amount.

3. The converter control device according to Claim 1 or 2, further comprising:
spectrum distribution means for distributing a frequency spectrum of the carrier frequency to a predetermined frequency range in a predetermined period.

4. The converter control device according to Claim 1,
wherein the first waveform generation means generates the first waveform by changing an amplitude and/or a cycle of the reference waveform at random or by using a predetermined regularity.

5. A converter comprising:
the converter control device according to any one of Claims 1 to 4;
a rectification circuit that converts AC power output from an AC power source into DC power,
a smoothing circuit that is connected in parallel to the rectification circuit on a DC output side of the rectification circuit; and
a switching circuit that includes an inductive element provided between the rectification circuit and the smoothing circuit, and switching means connected in parallel to the rectification circuit,
wherein the converter is connected between the AC power source and a load.

6. An air conditioner comprising:
an outdoor machine; and
the converter according to Claim 5, provided in the outdoor machine.

7. A converter control method for a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control method comprising:
a step of generating a reference waveform having a predetermined carrier frequency in an audible range;
a step of generating a first waveform by changing a shape of the generated reference waveform in a predetermined frequency range;
a step of generating a voltage command;
a step of comparing the first waveform with the voltage command, so as to output a switching signal for determining a duty ratio of ON and OFF of the switching means; and
a step of turning on and off the switching means on the basis of the switching signal.

8. A converter control program for a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control program causing a computer to execute:
a process of generating a reference waveform having a predetermined carrier frequency in an audible range;
a process of generating a first waveform by changing a shape of the generated reference waveform in a predetermined frequency range;
a process of generating a voltage command;
a process of comparing the first waveform with the voltage command, so as to output a switching signal for determining a duty ratio of ON and OFF of the switching means; and
a process of turning on and off the switching means on the basis of the switching signal.

9. A converter control method for a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control method comprising:
a step of generating a reference waveform having a predetermined carrier frequency in an audible range;
a step of generating a voltage command;
a step of comparing the reference waveform with the voltage command, so as to output a switching signal for determining a duty ratio of ON and OFF of the switching means; and
a step of turning on and off the switching means on the basis of a changed switching signal obtained by deviating the center of a duty of the switching signal by a predetermined amount.

10. A converter control program for a converter including a rectification circuit which converts AC power output from an AC power source into DC power, a smoothing circuit which is connected in parallel to the rectification circuit on a DC output side of the rectification circuit, and a switching circuit which includes an inductive element provided between the rectification circuit and the smoothing circuit, and switching means connected in parallel to the rectification circuit, the converter being connected between the AC power source and a load, the converter control program causing a computer to execute:
a process of generating a reference waveform having a predetermined carrier frequency in an audible range;
a process of generating a voltage command;
a process of comparing the reference waveform with the voltage command, so as to output a switching signal for determining a duty ratio of ON and OFF of the switching means; and
a process of turning on and off the switching means on the basis of a changed switching signal obtained by deviating the center of a duty of the switching signal by a predetermined amount.
